(19) Europäisches Patentamt
European Patent Office
Office européen des brevets

(11) **EP 2 607 865 A2**

(12) **EUROPÄISCHE PATENTANMELDUNG**

(43) Veröffentlichungstag:
**26.06.2013 Patentblatt 2013/26**

(51) Int Cl.:
***G01F 23/296*** *(2006.01)*

(21) Anmeldenummer: **12007760.7**

(22) Anmeldetag: **16.11.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **22.12.2011  DE 102011122127**

(71) Anmelder: **DEUTZ Aktiengesellschaft
51149 Köln (DE)**

(72) Erfinder: **Gonzalo, Medina-Sanchez
50937 Köln (DE)**

(54) **Verfahren und Vorrichtung zur Tankfüllstandserfassung in einem Kraftfahrzeug**

(57) Die Erfindung betrifft eine Vorrichtung zur Ermittlung des Tankfüllstandswertes von bewegten Fahrzeugen, umfassend wenigstens einen Tank, wenigstens einen Füllstandgeber, wenigstens ein Steuergerät, wenigstens eine Pumpe.

Figur 1

EP 2 607 865 A2

**EP 2 607 865 A2**

**Beschreibung**

Die Erfindung betrifft ein Verfahren und eine Vorrichtung zur Tankfüllstandserfassung in einem Kraftfahrzeug.

Derartige Lösungen funktionieren durch die Erfassung eines Analogsignals eines Tankfüllstandssensors. Das Signal wird durch in einem Steuergerät implementierte Algorithmen stark gefiltert, um die durch das Fahren verursachten Schwappensstörungen (sloshing) im Signal zu reduzieren. Da die charakteristische Konstante des Tiefpassfilters groß sein muss, wird der Tiefpassfilter langsamer. Dabei wird das gefilterte Signal nicht den aktuellen Füllstand zeigen, sondern einen älteren. Das macht sich vor allem dann bemerkbar, wenn die Flüssigkeit aus dem Tank gepumpt wird, wie bei dem Kraftstofftank oder dem AdBlue-Tank.

Des Weiteren existieren komplizierte Verfahren, die versuchen, die Zuverlässigkeit des Tiefpassfilterergebnisses zu erhöhen, in denen der Fahrzeugzustand (Beschleunigung, Bremsen, Geschwindigkeitshalten, Stoppen, usw.) berücksichtigt wird. Andere Verfahren setzen einen zweiten Tiefpassfilter ein, der schneller als der erste ist. Dieser zweite Tiefpassfilter sollte aktuellere Information über den Füllstand liefern, aber sein Einsatzbereich beschränkt sich auf Fahrzeugzustände, in denen das Schwappen niedriger ausfällt.

Andere Verfahren subtrahieren die akkumulierte verbrauchte Kraftstoffsollmenge in dem Fall von einem Kraftstofftank oder die akkumulierte dosierte Adblue-Sollmenge in dem Fall von einem AdBlue-Tank von einem Anfangsfüllstand während der Schwappensphase, um den Füllstand zu ermitteln. Der Anfangsfüllstandswert sollte über den Füllstandssensor in einer "ruhigen" Phase gemessen werden. Jedes Mal, wenn das Fahrzeug sich in einer "ruhigen" Phase befindet, wird der Anfangsfüllstandswert wieder gemessen und die akkumulierte Sollmenge auf null gesetzt. Dieses Verfahren bezieht sich auf die gewünschte oder einzuspritzende bzw. zu dosierende Menge, da die tatsächliche eingespritzte Menge wegen Toleranzen, Drift, Alterung, usw. nicht bekannt ist. Das führt zu einer Abweichung des tatsächlichen Tankfüllstands, die mit der Zeit immer größer wird, die in der nächsten "ruhigen" Phase zurückgesetzt werden kann. Das Zurücksetzen hat als Referenz den Tankfüllstandsgeberwert, was bei bestimmten Tankfüllstandsgebern, z. B. bei sogenannten Schaltstufensensoren, eine mögliche Fehlerquelle sein kann. Das Verfahren wäre fehlerhaft, wenn z. B. der vom Füllstandsgeber gemessene Tankfüllstand einer bestimmten Schaltstufe entspricht, aber der tatsächliche Füllstand näher zu der nächsten Stufe ist.

Die bekannten Verfahren haben den Nachteil, dass zusätzliche Kenngrößen und Sicherheitsmaßnahmen notwendig sind, die zu erheblich mehr Aufwand beim Eichen und bei Tests führen.

Es ist die Aufgabe der vorliegenden Erfindung, eine Vorrichtung und ein Verfahren zur Tankfüllstandserfassung in einem Kraftfahrzeug zu schaffen, das die oben genannten Nachteile vermeidet, einfacher, genauer und sicherer wird.

Die Aufgabe wird durch eine Vorrichtung gemäß Anspruch 1 und ein Verfahren gemäß Anspruch 4 gelöst.

Das hier beschriebene Verfahren und die dazugehörige Vorrichtung ermitteln kontinuierlich den Tankfüllstand (unabhängig von der Tankfüllstandsgebersorte, Schaltstufe, Ultraschall, usw.) in Abhängigkeit von der mathematischen Beziehung zwischen Tankvolumen und Tankfüllstandswert, von der eingespritzten bzw. dosierten und aus dem Tank ausgepumpten Sollmenge, von den stochastischen Eigenschaften des Schwappens und von der stochastischen Streuung des Einspritzventils bzw. Dosierungsmoduls.

Mit dieser Information kann das Tankfüllstandssystem mit Hilfe von einem Zustandsraumsystem mathematisch modelliert werden, und mit dem Einsatz von einem Kalman-Filter kann der Tankvolumenwert sowie der Tankfüllstandswert kontinuierlich ermittelt bzw. der Tankfüllstandsgeberwert gefiltert werden.

Erfindungsgemäß ist hierbei von Vorteil, dass eine genauere Ermittlung des Tankfüllstandswerts und des Tankvolumens möglich wird.

Nachfolgend werden einige Vorteile stichwortartig aufgeführt:

- einfacher Algorithmus
- Unabhängigkeit von der Tankfüllstandsgebersorte
- Fahrzeugszustand ist nicht zu beachten
- keine zusätzliche Sicherheitsspanne
- geringerer Aufwand bei der Kalibrierung und Eichung.

Die Erfindung wird anhand eines Ausführungsbeispiels unter Bezugnahme auf die Zeichnungen dargestellt, es zeigen:

Figur 1    SCR-System mit Tankfüllstandsmessung
Figur 2    eine schematische Darstellung des Kalmann-Filters
Figur 3    ein Messdiagramm Füllstand über die Zeit.

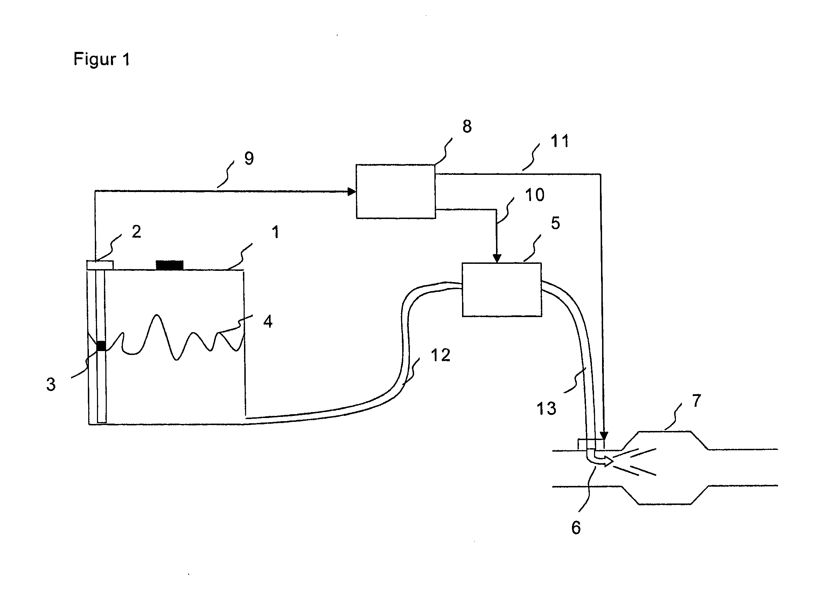

Der Einsatz eines Kalman-Filters zur Ermittlung des Tankfüllstandswerts wird nachfolgend für den Einsatz in einem System, wie es in Figur 1 dargestellt wird, aufgezeigt.

Der Kalman-Filter-Algorithmus beschäftigt sich mit der Schätzung eines zeitdiskreten Prozesses, was durch folgende Differenzgleichung dargestellt werden kann:

$$(1) \quad \mathbf{X}_k = \mathbf{F}_{k-1}\mathbf{X}_{k-1} + \mathbf{B}_{k-1}\mathbf{u}_{k-1} + \mathbf{w}_{k-1}$$

$$(2) \quad \mathbf{Z}_k = \mathbf{H}_k\mathbf{X}_k + \mathbf{v}_k$$

$X_k$:    die zu schätzende Systemzustandsgröße.

$F_{k-1}$:    beschreibt die Übergänge zwischen zeitlich aufeinanderfolgenden Zuständen $X_{k-1}$ und $X_k$,

$B_{k-1}$:    beschreibt die Beziehung zwischen $X_k$ und $U_{k-1}$.

$U_{k-1}$:    ist die wirkende Störung.

$W_{k-1}$:    ist der Rauschterm und stellt die zufälligen, nicht erfassbaren Komponenten. Der zeitlich unkorrelierte Rauschen $wk_{-1}$ hat einen Mittelwert 0 und eine Kovarianz Q.

$Z_k$:    ist die Messgröße.

$H_k$:    beschreibt die Beziehung zwischen der Messgröße $Z_k$ und der Zustandsgröße $X_k$.

$V_k$:    stellt das Messrauschen dar. "$V_k$" hat einen Mittelwert 0 und eine Kovarianz R.

Der Kalman-Filter-Algorithmus schätzt die Zustandsgröße $X_k$ anhand eines rekursiven Verfahrens mit Einsatz eines prädiktiven Teils:

$$(3) \quad \hat{\mathbf{x}}_{k|k-1} = \mathbf{F}_{k-1}\hat{\mathbf{x}}_{k-1} + \mathbf{B}_{k-1}\mathbf{u}_{k-1}$$

$$(4) \quad \hat{\mathbf{P}}_{k|k-1} = \mathbf{F}_{k-1}\hat{\mathbf{P}}_{k-1}\mathbf{F}_{k-1}^{\mathbf{T}} + \mathbf{Q}_{k-1}$$

und einem korrektiven Teil:

$$(5) \quad \hat{\mathbf{x}}_k = \hat{\mathbf{x}}_{k|k-1} + \hat{\mathbf{K}}_k\tilde{\mathbf{y}}_k$$

$$(6) \quad \hat{\mathbf{P}}_k = \hat{\mathbf{P}}_{k|k-1} - \hat{\mathbf{K}}_k\mathbf{S}_k\hat{\mathbf{K}}_k^{\mathbf{T}}$$

$$(7) \quad \tilde{\mathbf{y}}_k = \mathbf{z}_k - \mathbf{H}_k\hat{\mathbf{x}}_{k|k-1}$$

$$(8) \quad \mathbf{S}_k = \mathbf{H}_k\hat{\mathbf{P}}_{k|k-1}\mathbf{H}_k^{\mathbf{T}} + \mathbf{R}_k$$

$$(9) \quad \hat{\mathbf{K}}_k = \hat{\mathbf{P}}_{k|k-1}\mathbf{H}_k^{\mathbf{T}}\mathbf{S}_k^{-1}$$

Diese Erfindung beschäftigt sich mit der Applikation des Kalman-Filters zur Schätzung eines Tankfüllstands. Zuerst müssen die unterschiedlichen Zustandsgrößen identifiziert werden.

Bei einem idealen Tank mit einem idealen Füllstandsgeber, d. h. Toleranzen sind gleich 0 und es gibt keine Schwappen, kann der Füllstand mathematisch beschrieben werden:

$$(10)\ L = h * Vol$$

L: gemessener Level

Vol: Volumen

h: ist die mathematische Beziehung zwischen Level und Volumen. "h" wird durch die Geometrie des Tanks definiert. Z. B., bei einem würfelförmigen Behälter ist h = 1/ A : A = Fläche, die senkrecht zum Sensor ist.

Eine weitere mathematische Beziehung, die für dieses System gilt, ist:

$$(11)\ Vol = Vol_0 - d*m$$

Mit

Vol: Volumen

$Vol_0$: Volumen des Tanks bei Zeit = 0

d: Flüssigkeitsdichte

m: einzuspritzende Masse

In einer nicht idealen Situation - das Fahrzeug wird z. B. auf welliger Straße bewegt - müssen die Toleranzen von dem Füllstandsgeber und dem Einspritzmodul und das Schwappen berücksichtigt werden.

In (10) werden die Toleranz des Füllstandsgebers und das Schwappen hinzugefügt:

$$(12)\ L = h*Vol + s$$

"s" stellt die zufälligen und nicht erfassbaren Komponenten von Füllstandsgebertoleranz und den Schwappen dar. "s" ist eine stochastische Größe mit Mittelwert 0 und bekannter Kovarianz Q.

In (11) muss die Toleranz des Einspritzmoduls (w) hinzugefügt werden.

$$(13)\ Vol = Vol_0 - d*m + w$$

"w" ist eine stochastische Größe mit Mittelwert 0 und bekannter Kovarianz R.

(12) und (13) können wie (1) und (2) umgeformt werden:

(13) -> (1)

$$(14)\ Vol_k = (1)Vol_{k-1} + (-d)*m_{k-1} + w_{k-1}$$

(12) -> (2)

$$(15)\ L_k = hVol_k + s_k$$

für einen Rechenzyklus k

$$X_k = Vol_k$$

$$F_{k-1} = 1$$
$$B_{k-1} = -d$$
$$U_{k-1} = m_{k-1}$$
$$W_{k-1} = W$$
$$Z_k = L_k$$
$$H_k = h$$
$$V_{k-1} = S$$

Mit diesen identifizierten Elementen des Zustandsraums kann das aktuelle Volumen eines Behälters trotz Störungen wie Komponententoleranzen und Schwappen für jeden Rechenzyklus k mit Hilfe eines Kalman-Filters ermittelt werden.

In der Abbildung nach Figur 1 ist ein Teil von dem Abgasbehandlungssystem mit selektiver katalytische Reduktion (SCR) zu sehen. Der Tank (1) enthält AdBlue.

AdBlue (ISO 22241/DIN 70070/AUS32) ist der Markenname für eine wasserklare, synthetisch hergestellte 32,5-prozentige Lösung von hochreinem Harnstoff in demineralisiertem Wasser, die zur Nachbehandlung von Abgasen in einem SCR-Katalysator benutzt wird. Dabei wird durch selektive katalytische Reduktion (englisch selective catalytic reduction, SCR) der Ausstoß von Stickoxiden (NOx) um etwa 90 % (im Stationärbetrieb) reduziert. Die Markenrechte für AdBlue liegen beim Verband der Automobilindustrie (VDA). Der Füllstandsgeber (2) erfasst den Füllstand über einen Schwimmer (3). Das von der Bewegung des Fahrzeugs verursachte Schwappen (4) stört die korrekte Erfassung des Füllstandswerts. Der Füllstandsgeberwert wird dem Steuergerät (8) über die elektrische Leitung (9) übermittelt. Das Steuergerät steuert die Pumpe (5) über die elektrische Leitung (10) und das Dosierungsmodul (6) über die elektrische Leitung (11). Die Pumpe (5) pumpt Adblue über die Röhre (12) und (13) in Richtung Dosierungsmodul (6) und das Dosierungsmodul (6) spritzt Adblue in den SCR-Katalysator (7) ein.

Das Steuergerät berechnet in Abhängigkeit von externen Einflussgrößen die zu dosierende Adblue-Menge. Das Steuergerät muss den Tankfüllstand beachten und, falls nötig, Warnungen melden und, im extremen Fall, die Leistung des Motors reduzieren unter anderen möglichen Reaktionen.

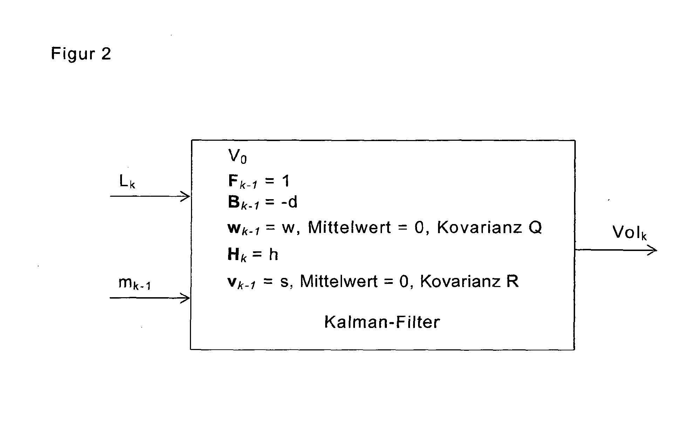

Der Kalman-Filter wird in Figur 2 dargestellt wie folgt angewendet:

für jeden Rechenzyklus k:

$L_k$ ist der von dem Füllstandsgeber (2) gemessene, gerauschte Level.
$m_{k-1}$ ist die von dem Dosierungsmodul (6) einzuspritzende Sollmenge.
$Vol_k$ ist das von dem Kalman-Filter ermittelte und gefilterte Volumen.

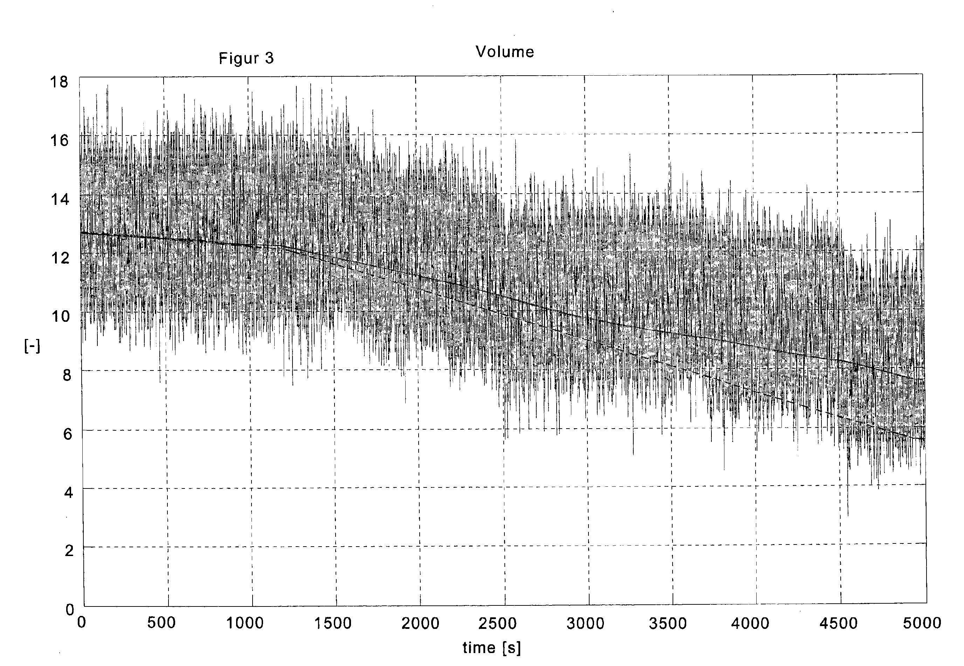

Die Abbildung in Figur 3 zeigt:

Die hüllkurvenartige blaue Linie zeigt das durch den Füllstandsgeber (2) erfasste Volumen.
Die gelbe Linie (untere) zeigt das mit Formel (11) ermittelte Volumen.
Die rote Linie (obere) zeigt das mit dem Kalman-Filter erfindungsgemäß ermittelte Volumen.

Die Erfindung ist für die Ermittlung des Füllstands von Systemen geeignet, die aus einem Tank, einer Pumpe und einem Einspritzventil bestehen. Die Erfindung ist besonders geeignet bei Systemen, die sich in bewegenden Fahrzeugen befinden.

| 1 | Tank |
|---|---|
| 2 | Füllstandsgeber |
| 3 | Schwimmer |
| 4 | Schwappen (wellenartige Veränderung des Flüssigkeitspegels) |
| 5 | Pumpe |
| 6 | Dosierungsmodul |
| 7 | SCR-Katalysator |
| 8 | Steuergerät |
| 9 | elektrische Leitung |
| 10 | elektrische Leitung |
| 11 | elektrische Leitung |
| 12 | Röhre/Rohrleitung |
| 13 | Röhre/Rohrleitung |

**Patentansprüche**

1. Vorrichtung zur Ermittlung des Tankfüllstandwertes von bewegten Fahrzeugen, umfassend wenigstens einen Tank (1), wenigstens einen Füllstandsgeber (2), wenigstens ein Steuergerät (8), wenigstens eine Pumpe (5).

2. Vorrichtung nach Anspruch 1,
   **dadurch gekennzeichnet, dass** der Füllstandsgeber (2) ein Ultraschallgeber ist.

3. Vorrichtung nach einem oder mehreren der vorgenannten Ansprüche, **dadurch gekennzeichnet, dass** der Füllstandgeber (2) wenigstens einen Schwimmer (3) aufweist.

4. Verfahren zur Ermittlung des Tankfüllstandwertes, umfassend die folgenden Schritte:

   Ermitteln eines Zustandsraumsystems, anschließendes Ermitteln eines Tankvolumenwertes mittels eines Kalman-Filters sowie Ermitteln des Tankfüllstandwertes und anschließendes Filtern des Tankfüllstandsgeberwertes.

Figur 1

EP 2 607 865 A2

Figur 2

$L_k$ →

$m_{k-1}$ →

$$V_0$$
$$\mathbf{F}_{k-1} = 1$$
$$\mathbf{B}_{k-1} = -d$$
$$\mathbf{w}_{k-1} = w, \text{ Mittelwert} = 0, \text{ Kovarianz } Q$$
$$\mathbf{H}_k = h$$
$$\mathbf{v}_{k-1} = s, \text{ Mittelwert} = 0, \text{ Kovarianz } R$$

Kalman-Filter

→ $Vol_k$

Figur 3

Volume